# EUROPEAN PATENT SPECIFICATION

(11) **EP 0 715 081 B1**
(45) Date of publication and mention of the grant of the patent: **13.09.2000**
(21) Application number: 95307959.7
(22) Date of filing: 07.11.1995
(51) Int. Cl.: F04D 29/28, F04D 17/16

(54) **Rotating fan having tapered disk component**
Rotierende Lüfter mit konischem Scheibenteil
Ventilateur tournant ayant une pièce en forme de disque conique

(30) Priority: 23.11.1994 US 344144
(43) Date of publication of application: 05.06.1996
(73) Proprietor: AMETEK Inc., Kent Ohio 44240 (US)
(72) Inventor: Swift, Robert. O., Stow, Ohio 44224 (US)
(74) Representative: Spall, Christopher John

(56) References cited:
- EP-A- 0 552 978
- DE-A- 1 628 248
- DE-A- 1 814 140
- FR-A- 1 281 625
- FR-A- 2 114 364
- GB-A- 983 687
- US-A- 2 899 129
- US-A- 3 289 922

## Description

### TECHNICAL FIELD

The invention herein resides in the art of rotating fans. More particularly, the invention relates to such rotating fans having a tapered cross-section. Specifically, the invention relates to such fans having a tapered disk component.

### BACKGROUND ART

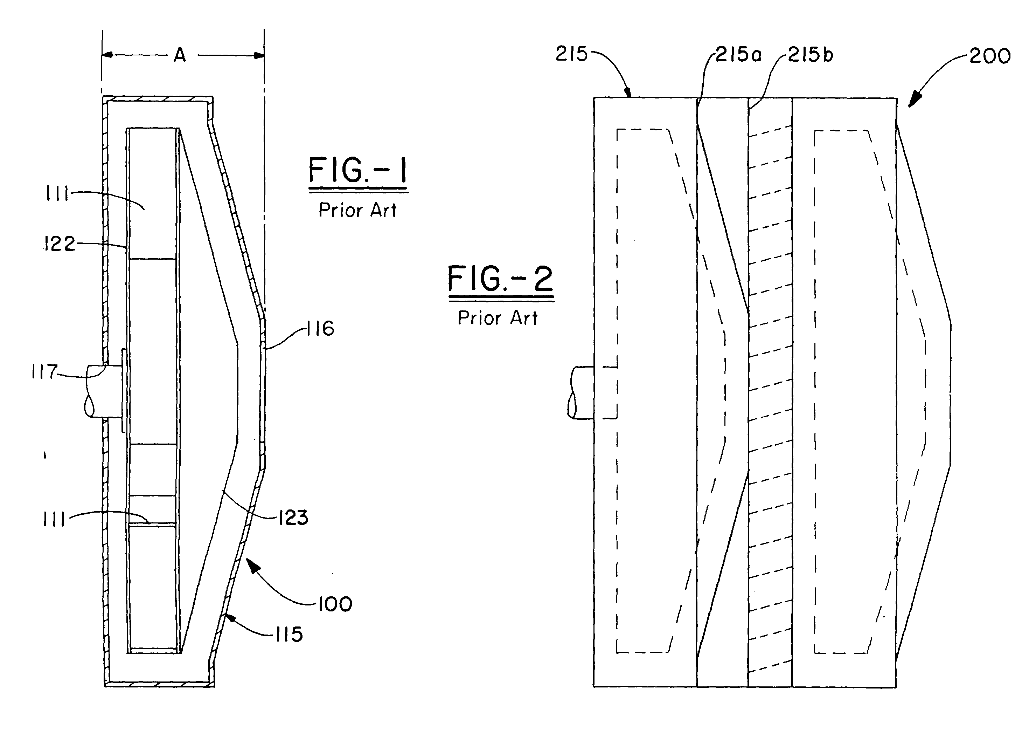

Heretofore it has been known that the overall performance of rotating fans may be improved by utilizing multistage fan systems which incorporate rotating fans in combination with stationary fans. In such assemblies, each stationary fan is interposed between the rotating fan, so that air moving from the outlet of one rotating fan toward the inlet of the other rotating fan is passed through the stationary fan so as to diffuse the air and ease the transitional flow of air from one rotating fan to the other. It has been found that the use of such stationary fans allows for more efficient operation. Such systems are capable of achieving greatly increased efficiency over single fan systems. Previously, rotating fans were comprised of a flat disk member, and a flat ring member with a plurality of blade members interposed between the ring and the disk. The desire to optimize both the fan inlet characteristics and the fan exhaust characteristics led to the development of tapered fans. The conventional tapered fan design utilizes a rotating fan member 100 having tapered fan ring 123 and a flat fan disk 122 with blades 111 interposed therebetween as shown in prior art Fig. 1 the shell 115 includes an inlet 116 for drawing air into the rotating fan and an outlet 117 for exhausting the air, wherein a fan shaft extends through the outlet. Such designs have succeeded in improving overall fan performance and in reducing the noise associated with such rotating fans. However, it has been found that such tapered fans, require the use of tapered shells 115 resulting in an increased case length from the fan shell to the inlet plane as designated by dimension "A" in prior art Fig. 1. Further, the need for a tapered fan shell 215 for use in conjunction with a tapered fan 200 in multi-stage combinations mandate the use of two shells 215a and 215b as shown in prior art Fig. 2. One shell 215a providing proper rotating fan shrouding and the other 215b used in a conventional stationary design.

GB 983687 A shows a centrifugal impeller having the features of the pre-characterising part of claim 1.

US-A-3 289 922 shows a barrel shaped centrifugal air compressor having two plates mounted on a shaft and spaced axially apart on the shaft. An air inlet aperture and an air outlet aperture allow access to axially spaced rotors in the compressor.

DE 1 628 248 shows two fan members rotatably mounted in a housing, each fan member including two axially spaced annular discs.

Accordingly, it is most desirable to obtain a tapered rotating fan assembly having a reduced case length from the start of the fan shell to the plane of the inlet, and requiring only one fan shell for two stage stationary fan systems while reducing production and packaging cost as well as simplifying shell design and cost.

### DISCLOSURE OF INVENTION

In light of the foregoing, it is an advantage of the invention that a rotating fan assembly has a tapered rotating fan member so as to increase fan performance.

Another advantage of the invention is the provision of a rotating fan assembly having a reduced case length from the start of the fan shell to the plane of the inlet.

Yet an additional advantage of the invention is the provision of a rotating fan assembly which employs a fan shell having a flat face, thereby reducing production design materials handling, and packaging costs as well as requiring only one shell in two-stage designs.

The foregoing and other advantages of the invention will become apparent as the detailed description proceeds.

In a first aspect of the invention, a rotating fan member has a tapered fan disk member with a frusto-conical shape, an annular fan ring member, and a plurality of tapered blade members fixedly interposed between said fan disk member and said fan ring member, characterised in that
said tapered fan disk member has a flat shaft plane portion, a circumferentially tapered portion extending at an oblique angle from said shaft plane portion toward said fan ring member, and a shaft aperture in said shaft plane portion and wherein said annular fan ring member is flat and has a central air inlet aperture therethrough.

In a further aspect of the invention a rotating fan assembly includes a fan housing case member having a shaft aperture therethrough,
a fan member rotated by a shaft extending through said shaft aperture and disposed within said fan housing case member, said fan member having a frusto-conical tapered disk member; a flat annular ring member; a plurality of tapered blade members interposed between said disk member and said ring member; and
a flat shell member matably received on said housing case member characterised in that
said frusto-conical tapered disk member has a flat shaft plane portion and a circumferentially tapered portion extending at an oblique angle from said shaft plane portion toward said ring member, said flat annular ring member having a central air inlet aperture therethrough, and wherein said flat shell member has an aperture wherein said flat shell member is positioned substantially parallel to said flat annular ring member and matably received on said fan housing case member.

A rotating fan member according to the invention may be used in a two stage rotating fan assembly comprising: a tapered fan housing case member; a rotating fan member rotatably disposed within the tapered fan housing case member, the rotating fan member having a frusto-conical tapered disk member, an annular ring member and a plurality of tapered blade members interposed between the disk member and the ring member; a flat shell member matably received on the tapered fan housing case member; and a stationary fan member abutting the flat shell member such that the shell member provides shrouding for both the rotating fan member and the stationary fan member.

### DESCRIPTION OF THE DRAWINGS.

For a complete understanding of the objects, techniques and structure of the invention, reference should be made to the following detailed description and accompanying drawings wherein:
Fig. 1 is an elevational view showing a conventional prior art fan assembly;
Fig. 2 is an elevational view showing a conventional two-stage prior art fan assembly;
Fig. 3 is an elevational view, in parallel cross-section, of a fan assembly embodying the concepts of the present invention;
Fig. 4 is a top plan view of a rotating fan member according to the concepts of the present invention;
Fig. 5 is a partial cross-sectional view of the fan member of Fig. 4 taken along the line 5-5;
Fig. 6 is a top plan view of the novel disk member of the present invention;
Fig. 7 is a cross-sectional view of the disk member of Fig. 6 taken along the line 7-7;
Fig. 8 is a top plan view of the ring member of the present invention;
Fig. 9 is an elevational view of a blade member of the present invention;
Fig. 10 is a top plan view of the blade of Fig. 9; and
Fig. 11 is an elevational view of a two-stage fan assembly embodying the concepts of the present invention.

### BEST MODE FOR CARRYING OUT THE INVENTION

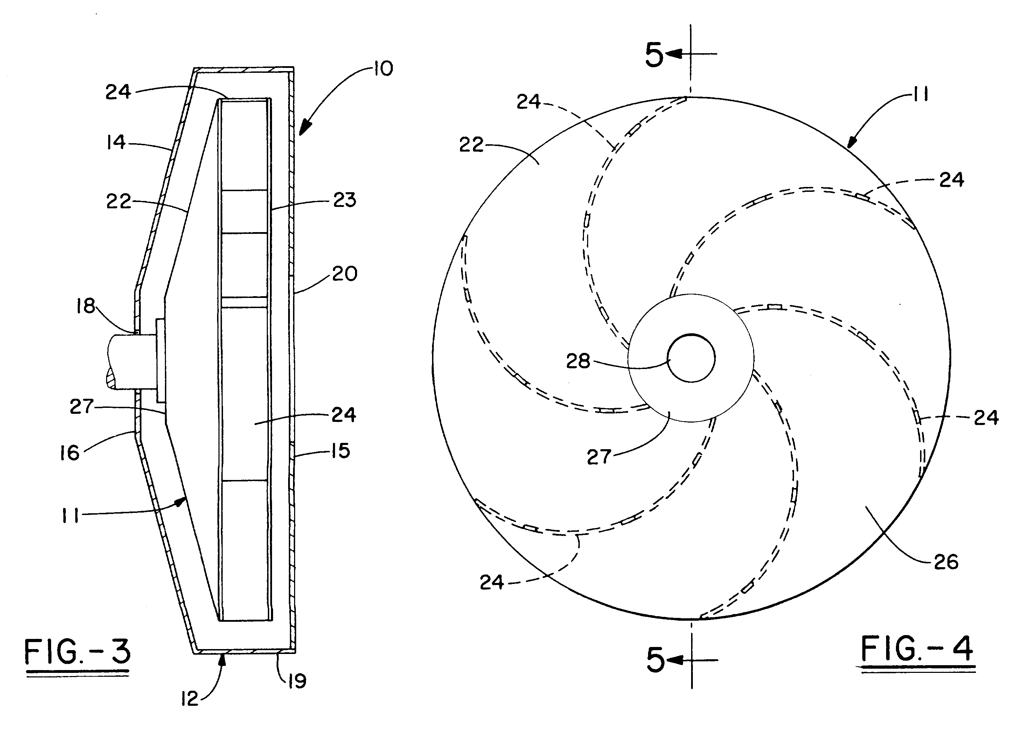

Referring now to the drawings and more particularly to Fig. 3, it can be seen that a rotating fan assembly according to the concept of the present invention is designated generally by the numeral 10. While it will be appreciated that the concept of the invention is applicable to any rotating fan, the description herein will be with respect to a fan assembly of the nature shown. In such a device, a rotating fan member 11 is housed in an enclosure shroud 12. The enclosure shroud 12 includes a case member 14 and a shell member 15. As shown, an end wall 16 of the case member 14 is tapered such that it has a frusto-conical shape. The end wall 16 further includes a shaft receiving aperture 18. A generally circumferential side wall 19 extends axially from the end wall 16.

The shell member 15 is generally disk shaped having a circumference closely approximating that of the side wall 19. The shell member 15 also includes a central air inlet aperture 20. The shell member 15 is matably received in the case member 14 so as to enclose the fan member 11.

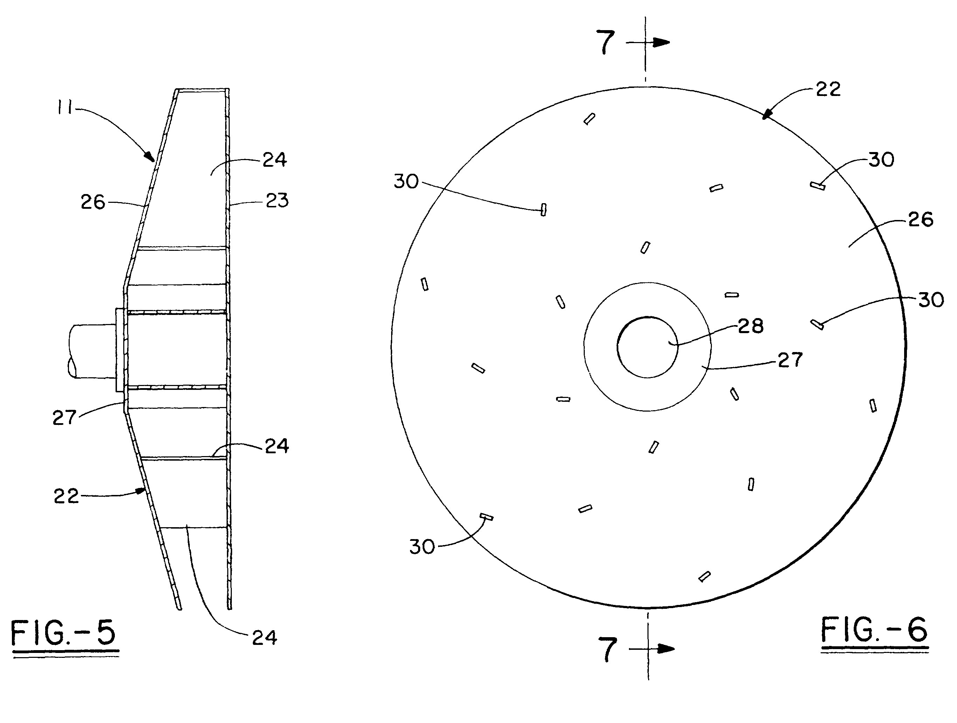

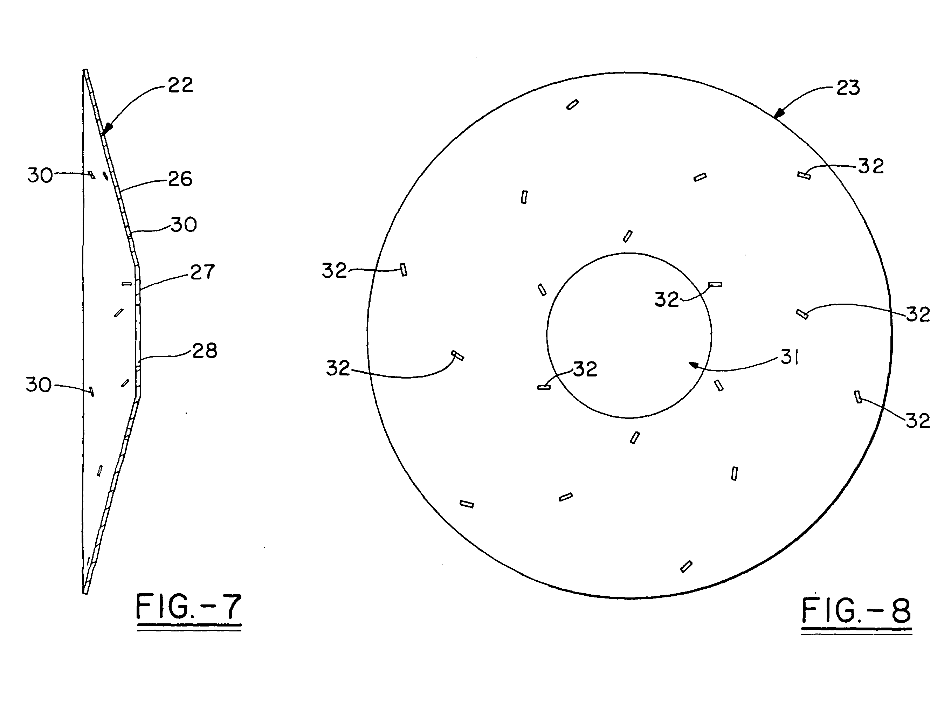

With continued reference to Fig. 3 and also to Figs. 4-11 it can be seen that the fan member 11 is comprised generally of a fan disk member 22, a fan ring member 23 and a plurality of fan blade members 24. The disk member 22 is a generally annular member, preferably formed from an appropriate aluminum or other similar material. As is best seen in Figs. 5, 6 and 7, a portion 26 of the disk member 22 is circumferentially tapered resulting in a disk member 22 having a frusto-conical shape. The disk member 22 is further defined by a central shaft plane 27. As can be seen, the shaft plane 27 is flat relative to the surrounding tapered portion 26. Further, a shaft aperture 28 is centered within the shaft plane 27. As is best shown in Fig. 6, the disk member 22 further includes a plurality of blade stake apertures 30 which penetrate the tapered portion 26.

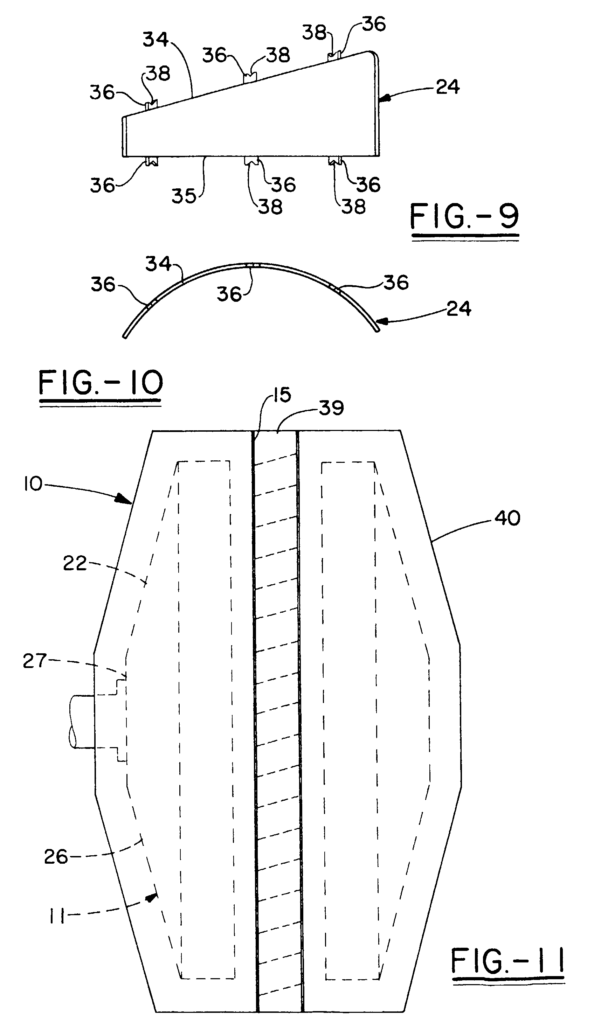

The fan ring member 23 is similar in many respects to the disk member 22 previously described. With particular reference to Figs. 5 and 8 it can be seen that the ring member 23 is a flat annular disk shaped member having a circumference approximating that of the disk member 22. Further, the ring member 23 includes a central air inlet aperture 31 having a diameter approximately one third that of the outside diameter of the ring 23. A plurality of blade stake apertures 32 penetrate the ring member 23.

Referring now to Figs. 9 and 10, a representative fan blade member 24 is depicted. The blade members 24 may be manufactured from the same material as the ring 23 and disk 22. As is best shown in Fig. 9, the blade member 24 has a tapered upper surface 34 and a flat lower surface 35. For reasons which will become apparent as the description proceeds, the angle of the tapered upper surface 34 approximates that of the tapered portion 26 of the disk member 22. The tapered upper surface 36 and flat lower surface 35 each include a plurality (preferably three) of stake tabs 36. Each stake tab 36 extends outwardly from the surfaces 34 and 35. It is preferred that a tab 36 be located at the mid-point along the length of each surface 34 and 35 and that tabs 36 be included at equal distances from the mid-point proximal to the ends of the blade member 24. It can further be seen that each tab 36 includes a V-shaped notch 38. As shown in Fig. 10 each blade member 24 is curvilinearly formed into an arc.

The fan member 11 is assembled with the blade members 24 interposed between the disk member 22 and the ring member 23. The tapered upper surface 34 of each blade member 24 is matably received in the underside of the tapered portion 26 of the disk member 22. A plurality of blades 24 are arranged in a curved sunburst pattern radiating outwardly from the air inlet aperture 31 of the ring member 23. Accordingly, the stake apertures 30 and 32 of the disk 22 and ring 23 respectively, are arranged in a similar curved sunburst pattern so as to receive the stake tabs 36 of the blade member 24. The stake tabs 36 may then be staked so as to affix permanently the blade member 24 to both the ring member 23 and the disk member 22. The staking process is facilitated by the V-shaped notches 38 which allow the tabs 36 to be crimped.

The assembled fan member 11 may then be housed in the enclosure shroud 12. The fan member 11 is mounted in the enclosure 12 such that the frusto-conical disk member 22 is adjacent to the frusto-conical case member 14 while the flat ring member 23 is adjacent to the flat shell member 15. Accordingly, the shaft aperture 28 of the disk 22 is aligned with the shaft aperture 18 of the case 14, and the air inlet aperture 31 of the ring 23 is aligned with the air inlet aperture 20 of the shell 15.

As is best shown in Fig. 3, the novel arrangement of the present invention dramatically reduces the case length from the inlet plane to the start of the shell, designated as dimension "A" in the drawings, compared with the prior arrangement depicted in Fig. 1.

Referring now to Fig. 11, the fan assembly 10 is depicted in a two stage arrangement in conjunction with a stationary fan 39 and a conventional tapered fan assembly 40. When the novel arrangement of Fig. 11 is compared with the prior art two stage arrangement depicted in Fig. 2 the benefits of the invention become readily apparent. Specifically, the present invention's use of the tapered disk member 22 and flat ring member 23 permit the use of a flat shell member 15 as described above. Accordingly, when the assembly 10 is used in a two stage system as depicted, the flat shell member 15 serves a dual purpose by acting as a shell for the stationary fan 39, while providing proper rotating fan shrouding. Accordingly, the use of two shells, as depicted in prior art Fig. 2 is no longer necessary.

Thus, it can be seen that the objects of the invention have been satisfied by the structure presented above. While in accordance with the patent statutes, only the best mode and preferred embodiment of the invention has been presented and described in detail, it is to be understood that the invention is not limited thereto or thereby. Accordingly, for an appreciation of the true scope and breadth of the invention reference should be made to the following claims.

## Claims

1. A rotating fan member (11) having a tapered fan disk member (22) with a frusto-conical shape, an annular fan ring member (23), and a plurality of tapered blade members (24) fixedly interposed between said fan disk member (22) and said fan ring member (23), characterised in that
said tapered fan disk member (22) has a flat shaft plane portion (27), a circumferentially tapered portion (26) extending at an oblique angle from said shaft plane portion (27) toward said fan ring member, and a shaft aperture (28) in said shaft plane portion (27) and wherein said annular fan ring member (23) is flat and has a central air inlet aperture (31) therethrough.

2. A rotating fan assembly including
a fan housing case member (14) having a shaft aperture (18) therethrough,
a fan member (11) rotated by a shaft extending through said shaft aperture (18) and disposed within said fan housing case member (14), said fan member (11) having a frusto-conical tapered disk member (26); a flat annular ring member (23); a plurality of tapered blade members (24) interposed between said disk member (26) and said ring member (23); and
a flat shell member (15) matably received on said housing case member (14) characterised in that
said frusto-conical tapered disk member (26) has a flat shaft plane portion (27) and a circumferentially tapered portion extending at an oblique angle from said shaft plane portion toward said ring member, said flat annular ring member (23) having a central air inlet aperture therethrough, and wherein said flat shell member (15) has an aperture (20) wherein said flat shell member (15) is positioned substantially parallel to said flat annular ring member (23) and matably received on said fan housing case member (14).

## Patentansprüche

1. Rotierender Lüfter (11) mit einer konischen Lüfterscheibe (22) in Form eines Kegelstumpfes, einem kreisförmigen Lüfterring (23) und einer Vielzahl von konischen Lüfterschaufeln (24), welche feststehend zwischen der Lüfterscheibe (22) und dem kreisförmigen Lüfterring (23) angeordnet ist,
**dadurch gekennzeichnet, dass**
die konische Lüfterscheibe (22) eine ebene Wellenauflage (27), sowie einen konischen Umfangsbereich (26) aufweist, welcher in einem schrägen Winkel zwischen der ebenen Wellenauflage (27) und dem Ringteil des Lüfters verläuft, sowie eine Wellenöffnung (28) in der ebenen Wellenauflage (27) enthält, wobei der kreisförmige Lüfterring (23) flach ist und eine zentrale Einlassöffnung (31) für Luft aufweist.

2. Rotierende Lüftereinheit mit einem Lüftergehäuse (14) mit einer darin angeordneten Wellenöffnung (18), einem Lüfterelement (11), welches mit Hilfe einer Welle rotiert wird, welche die Wellenöffnung (18) durchquert und innerhalb eines Lüftergehäuses (14) angeordnet ist, wobei das Lüfterelement (11) ein konisches Scheibenteil (26) in Form eines Kegelstumpfes; einen flachen kreisförmigen Ringteil (23); eine Vielzahl von konischen Schaufelelementen (24), welche zwischen dem Scheibenteil (26) und dem Ringelement (23) angeordnet sind, sowie einen flachen Rumpf (15) aufweist, welcher in das Gehäuse (14) eingepasst ist,
**dadurch gekennzeichnet, dass**
die Lüfterscheibe (26) in Form eines Kegelstumpfes eine ebene Wellenauflage (27) und einen konischen Umfangsteil aufweist, der in einem schrägen Winkel zwischen der ebenen Wellenauflage und dem Ringteil verläuft, wobei der flache kreisförmige Ringteil (23) eine ihn durchquerende zentrale Einlassöffnung für Luft aufweist, und in dem der flache Rumpfteil (15) eine Öffnung (20) enthält, die weitgehend parallel gegenüber dem flachen ringförmigen Ringteil (23) angeordnet und in das Lüftergehäuse (14) eingepasst ist.

## Revendications

1. Elément rotatif (11) de ventilateur comportant un élément (22) de disque de ventilateur, se rétrécissant, en forme de tronc de cône, un élément annulaire (23) d'anneau de ventilateur, et une pluralité d'éléments (24) d'aube, se rétrécissant, rigidement interposés entre ledit élément (22) de disque de ventilateur et ledit élément (23) d'anneau de ventilateur, caractérisé en ce que ledit élément (22) de disque de ventilateur, se rétrécissant, comporte une portion plane (27), plate, pour arbre, une portion (26), à la circonférence, se rétrécissant, s'étendant selon un angle oblique depuis ladite portion plane (27) pour arbre vers ledit élément d'anneau de ventilateur, et une ouverture (28) pour arbre située dans ladite portion plane (27) pour arbre, ledit élément annulaire (23) d'anneau de ventilateur étant plat et percé d'une ouverture centrale (31) d'entrée d'air.

2. Dispositif de ventilateur rotatif comprenant :
- un élément (14) de boîtier de logement de ventilateur percé d'une ouverture (18) pour arbre,
- un élément (11) de ventilateur entraîné en rotation par un arbre s'étendant à travers ladite ouverture (18) pour arbre, et disposé à l'intérieur dudit élément (14) de boîtier de logement de ventilateur, ledit élément (11) de ventilateur comportant un élément (26) de disque, se rétrécissant, de forme tronconique; un élément plat (23) d'anneau annulaire; une pluralité d'éléments (24) d'aube, se rétrécissant, interposés entre ledit élément (26) de disque et ledit élément (23) d'anneau ; et
- un élément plat (15) de couvercle reçu de façon conjuguée sur ledit élément (14) de boîtier de logement, caractérisé en ce que
ledit élément (26) de disque, se rétrécissant, de forme tronconique, présente une portion (27) plane pour arbre, plate, et une portion se rétrécissant, à la circonférence, s'étendant selon un angle oblique depuis ladite portion plane pour arbre vers ledit élément d'anneau, ledit élément plat (23) d'anneau annulaire étant percé d'une ouverture centrale d'entrée d'air, ledit élément (15) plat de couvercle comportant une ouverture (20), ledit élément plat (15) de couvercle étant disposé sensiblement parallèle audit élément plat ( 23) d'anneau annulaire et reçu, de façon conjuguée, sur ledit élément (14) de boîtier de logement de ventilateur.
